# EUROPEAN PATENT SPECIFICATION

(11) **EP 3 087 799 B1**
(45) Date of publication and mention of the grant of the patent: **18.03.2020**
(21) Application number: 14873257.1
(22) Date of filing: 23.12.2014
(51) Int. Cl.: G06F 3/01, G06F 1/16, H04W 88/02, H04W 4/12

(54) **ABSTRACTED PATTERN MESSAGING WEARABLE ELECTRONIC DEVICE FOR WIRELESS COMMUNICATION**
TRAGBARE ELEKTRONISCHE VORRICHTUNG MIT NACHRICHTENÜBERMITTLUNG MIT ABSTRAHIERTEM MUSTER FÜR DRAHTLOSE KOMMUNIKATION
DISPOSITIF ELECTRONIQUE PORTATIF DE MESSAGERIE A MOTIFS ABSTRAITS POUR COMMUNICATION SANS FIL

(30) Priority: 28.12.2013 US 201314142782
(43) Date of publication of application: 02.11.2016
(73) Proprietor: Intel Corporation, Santa Clara, CA 95054 (US)
(72) Inventor: MAGI, Aleksander, Aloha, OR 97007 (US)
(74) Representative: Rummler, Felix
(86) International application number: PCT/US2014/072013
(87) International publication number: WO 2015/100275

(56) References cited:
- EP-A1- 1 524 586
- EP-A1- 1 721 237
- EP-A1- 2 368 455
- KR-A- 20110 103 254
- US-A1- 2004 207 542
- US-A1- 2013 271 350
- US-A1- 2013 332 353

## Description

### TECHNICAL FIELD

Embodiments described herein generally relate to an abstracted pattern messaging wearable electronic device for wireless communication.

### BACKGROUND

End users have more electronic device choices than ever before. A number of prominent technological trends are currently afoot (e.g., mobile electronic devices, smaller electronic devices, increased user connectivity, etc.), and these trends are changing the electronic device landscape. One of the technological trends currently afoot is electronic devices that can be worn by users, sometimes referred to as wearable electronic devices. Wearable electronic devices can be worn on a user's wrist, arm, ankle, etc. Electronic devices such as mobile phones provide features for typing and sending messages; however, this often requires the user to tediously type messages using a small interactive keyboard on the mobile phone. Although wearable electronic devices are quickly becoming a member of the technological ecosystem, interactions between device and user have yet to become streamlined and generally suffer from the same limitations as mobile phones for communicating messages.

EP 1 721 237 A1 describes a wearable modular interface strap device for supporting multiple module units. EP 1 524 586 describes a skin stimulation system integrated into a piece of clothing or any type of wearable accessory which is connected to a controlling device.

US 2004/207542 A1 describes a device for enhancing interpersonal communication over distance through use of touch. A vibrotactile (touch-and-vibration) interface is used to improve existing remote communication by allowing tactile cues to augment the audiovisual information in real-time. The pressure exerted by each finger of the transmitter produces patterns of vibration against the corresponding finger of the receiver. A hand-held device using the interface allows a user to transmit and receive patterns of vibration to and from a remote user and signify tactile gestures, or expressive uses of touch.

### SUMMARY

The invention is defined in the claims. In the following description, any embodiment referred to and not falling within the scope of the claims is merely an example useful to the understanding of the invention.

### BRIEF DESCRIPTION OF THE DRAWINGS

Embodiments are illustrated by way of example and not by way of limitation in the FIGURES of the accompanying drawings, in which like references indicate similar elements and in which:
FIGURE 1 is a simplified orthographic view illustrating an abstracted pattern messaging wearable electronic device for wireless communication in accordance with one embodiment of the present disclosure;
FIGURE 2 is a view illustrating a particular electronic bead of the wearable electronic device of FIGURE 1;
FIGURES 3A-3B illustrate an embodiment of example procedures for abstracted pattern messaging using wearable electronic device;
FIGURE 4 is a simplified block diagram illustrating example logic that may be used to execute activities associated with wearable electronic device
FIGURE 5 is a simplified block diagram illustrating an embodiment of a communication system for wireless communication between wearable electronic devices;
FIGURE 6 is a simplified orthographic view illustrating an abstracted messaging wearable electronic device for wireless communication in accordance with another embodiment of the present disclosure;
FIGURES 7A-7C illustrate an embodiment of example procedures for abstracted messaging using the wearable electronic device of FIGURE 6;
FIGURE 8 is a simplified block diagram illustrating example logic that may be used to execute activities associated with the wearable electronic device;
FIGURE 9 is a simplified block diagram illustrating another embodiment of a communication system for wireless communication between wearable electronic devices;
FIGURE 10 is a simplified flow diagram illustrating potential operations for a wearable electronic device in accordance with one embodiment of the present disclosure; and
FIGURE 11 is a simplified flow diagram illustrating potential operations for a wearable electronic device in accordance with another embodiment of the present disclosure.
The FIGURES of the drawings are not necessarily drawn to scale, as their dimensions can be varied considerably without departing from the scope of the present disclosure.

### DETAILED DESCRIPTION OF EXAMPLE EMBODIMENTS

### OVERVIEW

Example embodiments described herein provide for a wearable electronic device, such as an electronic bracelet, that includes a circuit board coupled to a plurality of electronic components (which may include any type of components, elements, circuitry, etc.). One particular implementation of a wearable electronic device includes at least one electronic bead including a touch input device configured to receive a first touch input from a first user associated with the wearable electronic device, and a communication module in communication with the at least one electronic bead. The communication module includes a processor configured to receive the first touch input from the at least one electronic bead, and send a first message including first information indicative of the first touch input and a first device identifier associated with the at least one electronic bead to an electronic device associated with a second user.

In at least one embodiment, the wearable electronic device further includes a bracelet portion, wherein the at least one electronic bead and the communication module are configured to be affixed to the bracelet portion. In still another embodiment, the first device identifier is further associated with the second user. In another embodiment, the electronic device associated with the second user includes another wearable electronic device. In another embodiment, the electronic device associated with the second user is configured to provide a first sensory output indicative of the first touch input. In still another embodiment, the association of the first device identifier with the second user is performed by the first user.

In another embodiment, the first touch input includes a pattern of touch inputs provided to a plurality of electronic beads of the wearable electronic device, and wherein the first message includes first information indicative of the pattern of touch inputs. In another embodiment, the processor is further configured to receive a second message including second information indicative of a second touch input provided to the electronic device associated with the second user, and a second device identifier associated with the electronic device associated with the second user. In another embodiment, the second device identifier is further associated with the first user.

In another embodiment, the wearable electronic device further includes at least one sensory output device associated with the at least one electronic bead, wherein the at least one sensory output device is configured to provide a second sensory output indicative of the second touch input. In still another embodiment, the at least one sensory output device includes at least one of an illumination device and a vibration device. In another embodiment, the second touch input includes a pattern of touch inputs provided to the electronic device associated with the second user, and wherein the second information is indicative of the pattern of touch inputs. In another embodiment, the communication module is further configured to cause a sensory output device of each of a plurality of electronic beads to provide a sensory output indicative of the pattern of touch inputs.

Another particular implementation includes a wearable electronic device comprising at least one electronic bead including a touch input device configured to receive a first touch input from a first user associated with the wearable electronic device, and a communication module in communication with the at least one electronic bead including logic, at least a portion of which is partially implemented in hardware. The logic is configured to receive the first touch input from the at least one electronic bead, and send a first message including first information indicative of the first touch input and a first device identifier associated with the at least one electronic bead to an electronic device associated with a second user.

Another particular implementation includes at least one computer readable storage medium comprising instructions, wherein the instructions when executed by at least one processor cause the at least one processor to receive, by at least one electronic bead of a wearable electronic device, a first touch input from a first user associated with the wearable electronic device; receive, by a communication module in communication with the at least one electronic bead, the first touch input from the at least one electronic bead; and send a first message including first information indicative of the first touch input and a first device identifier associated with the at least one electronic bead to an electronic device associated with a second user.

Another particular implementation includes a wearable electronic device including at least one optical light strand, and a communication module in communication with the at least one optical light strand. The communication module includes a processor configured to receive a timer input indicative of a first determined message duration from a first user associated with the wearable electronic device; and send a first message including first information indicative of the first determined message duration to an electronic device associated with a second user.

In one embodiment, the at least one optical strand comprises a bracelet portion of the wearable electronic device. In another embodiment, the wearable electronic device further includes a timer input device configured to receive the timer input from the first user. In still another embodiment, the electronic device associated with the second user is configured to provide an illumination output for a duration corresponding to the first determined message duration.

In another embodiment, the processor is further configured to receive a second message including second information indicative of a second determined message duration from the electronic device associated with the second user. In still another embodiment, the communication module is further configured to cause the at least one of optical light strand to illuminate for a duration corresponding to the second determined message duration.

Another particular implementation includes a system including a first wearable electronic device and a second wearable electronic device. The first wearable electronic device includes at least one first electronic bead the at least one first electronic bead including a first touch input device configured to receive a first touch input, and a first communication module in communication with the at least one first electronic bead. The first communication module includes first logic configured to receive the first touch input from the at least one first electronic bead, and send a first message including first information indicative of the first touch input and a first device identifier associated with the at least one electronic bead. The second wearable electronic device includes at least one second electronic bead, and a second communication module in communication with the at least one second electronic bead. The second communication module includes second logic configured to receive the first message from the first wearable electronic device.

### EXAMPLE EMBODIMENTS

The following detailed description sets forth example embodiments of apparatuses, methods, and systems relating to configurations for an interchangeable charm messaging wearable electronic device. Features such as structure(s), function(s), and/or characteristic(s), for example, are described with reference to one embodiment as a matter of convenience; various embodiments may be implemented with any suitable one or more of the described features.

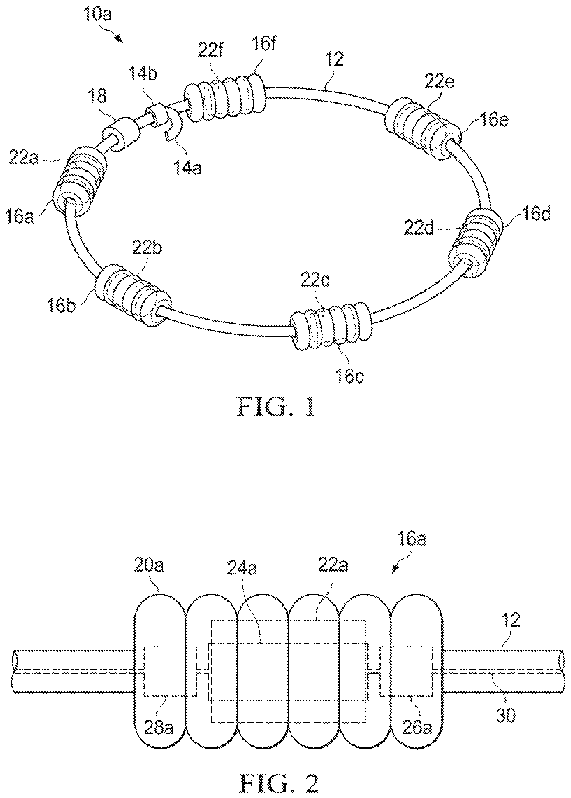

FIGURE 1 is a simplified orthographic view illustrating an abstract pattern messaging wearable electronic device 10a for wireless communication in accordance with one embodiment of the present disclosure. Wearable electronic device 10a can include a bracelet portion 12 having a first clasp end 14a and a second clasp end 14b. In at least one embodiment, first clasp end 14a and second clasp end 14b are configured coupled together to allow wearable electronic device 10a to be worn around a wrist of a user. In the embodiment illustrated in FIGURE 1, wearable electronic device 10a further includes a first electronic bead 16a, a second electronic bead 16b, a third electronic bead 16c, a fourth electronic bead 16d, and a fifth electronic bead 16e attached to bracelet portion 12. Wearable electronic device 10a further includes a communication module 18 attached to bracelet portion 12 and in communication with each electronic bead 16a-16e. In various embodiments, communication module 18 may be further configured to communicate with other wireless electronic devices such a wearable electronic device associated with another user. Each of electronic beads 16a-16f may include a corresponding touch input device 22a-22f disposed at least partially within electronic beads 16a-16f. In a particular embodiment, each of touch input devices 22a-22f are disposed at least partially within an extend around at least a portion of the outer surface of the corresponding electronic beads 16a-16f. In the particular embodiment illustrated in FIGURE 1, bracelet portion 12 is constructed in a closed ring having a clasp to facilitate placing wearable electronic device 10a upon the user's wrist. In at least one embodiment, connecting of first clasp end 14a to second clasp end 14b may initiate powering up of wearable electronic device 10a. In still other embodiments, bracelet portion 12 may be constructed as a generally ring shaped form with an open portion between ends to facilitate placing of wearable electronic device 10a upon a wrist of a user. In various embodiments, bracelet portion 12 may be constructed of any suitable material such as metal, plastic, wood, wire, string or any combination thereof.

FIGURE 2 is a view illustrating a particular electronic bead 16a of wearable electronic device 10a of FIGURE 1. First electronic bead 16a includes a first touch input device 22a disposed at least partially within a bead housing 20a. First touch input device 22a is configured to receive a touch input from the user to initiate one or more functions of wearable electronic device 10a. In particular embodiments, first touch input device 22a may include one or more of a button, a capacitive touch surface, a resistive touch surface, or any other suitable touch input device. In a particular embodiments, first touch input device 22a may include all or a portion of an outer surface of bead housing 20a. The number of touch input devices illustrated in FIGURE 1 are provided for illustrative purposes only; it should be understood that any number of fewer or more touch input devices can be configured for a wearable electronic device within the scope of the present disclosure.

First electronic bead 16a further includes one or more first illumination device(s) 24a disposed upon and/or within bead housing 20a and configured to provide illumination as a visual feedback to the user. In particular embodiments, first illumination device(s) 24a may include one or more light-emitting diodes (LEDs), liquid crystal displays (LCDs), organic light-emitting diode displays (OLEDs), lamps or any other suitable illumination devices. In a particular embodiment, housing 20a may be constructed of a substantially transparent and/or translucent material and illumination device(s) 24a may be disposed within bead housing 20a such that illumination provided by illumination device(s) 24a is visible through bead housing 20a.

First electronic bead 16a may further include vibration device 26a disposed within bead housing 20a and configured to provide a vibration to the user. First electronic bead 20a may still further include a bead control module 28a configured to control various aspects of first electronic bead 16a as further described herein. Wearable electronic device 10a may further include a communication bus 30 disposed within or upon bracelet portion 12 to allow bead control module 28a to communicate with communication module 18.

Similarly, second electronic bead 16b, third electronic bead 16c, fourth electronic bead 16d, fifth electronic bead 16e, and sixth electronic bead 16f may be constructed in a similar manner as that described with respect to first electronic bead 16a and may be coupled to communication bus 30 to facilitate communication with communication module 18. In one or more embodiments, housing portions of electronic beads 16a-16f may be constructed in one or more decorative shapes, such as a "smiley face", skull, hearts, various geometric shapes, or any other suitable or desirable shape.

In various embodiments, each of electronic beads 16a-16f have an associated device identifier to identity the particular electronic bead 16a-16f from among a plurality of electronic beads. In at least one embodiment, the device identifier is a unique identifier. In accordance with various embodiments, the identifier associated with a particular electronic bead 16a-16f may be further associated with a member of one or more groups (or "tribes") to which the user of wearable electronic device 10a also belongs. For example, each electronic bead 16a-16f may be associated with a family member, friend, member of a social group, and/or co-worker of the user of wearable electronic device 10a. In still other embodiments, one or more electronic beads 16a-16f of wearable electronic device 10a may be associated with a single member.

In accordance with various embodiments, a first user may utilize wearable electronic device 10a to communication with specific members of a group in which each electronic bead 16a-16f may signify a different member of the group or a number. In still other embodiments, more than one of electronic bead 16a-16f. The first user may interact with one or more of electronic beads 16a-1fe via the corresponding touch input device 22a-22f to send an input such as pulse, pattern or other gesture of interaction to a certain one or more electronic beads of a second wearable electronic device worn by a second user who is a member of the group to which the first user belongs. The one or more electronic beads of the second wearable electronic device may provide a sensory indication such as a visual indication and/or vibration indication to the second user corresponding to the input of the first user.

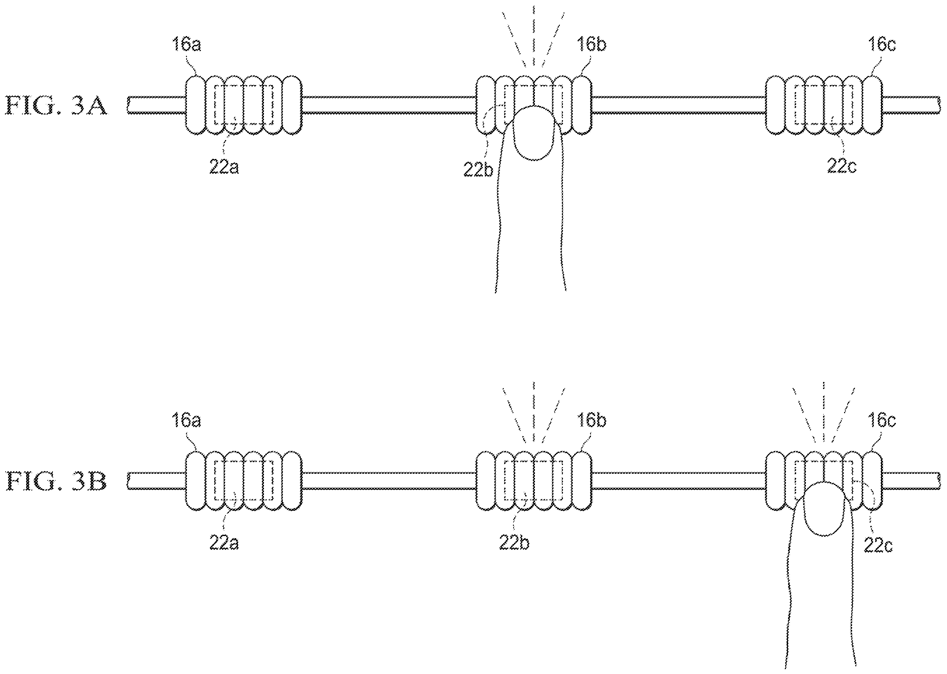

FIGURES 3A-3B illustrate an embodiment of example procedures for abstracted pattern messaging using wearable electronic device 10a. Figure 3A illustrates the sending of a message corresponding to a single touch by a first user in which the first user touches and holds second electronic bead 16b for a predetermined period of time to initiate the sending of a message by communication module 18 to a corresponding electronic bead of a second wearable electronic device associated with a second user. In at least one embodiment, second electronic bead 16b may illuminate in response to the touch input from the first user. Upon receiving the message sent by communication module 18, the second wearable electronic device may be configured to illuminate and/or vibrate the corresponding electronic bead of the second wearable device.

FIGURE 3B illustrates the sending of a pattern corresponding to multiple touches by a first user of one or more electronic beads 16a-16f in which the first user second touches electronic bead 16b and then subsequently touching third electronic bead 16c of wearable electronic device 10a for a predetermined time period to initiate the sending of one or more messages corresponding to a pattern of second electronic bead 16b and third electronic bead 16c by communication module 18 to one or more corresponding electronic beads of the second wearable electronic device associated with the second user. Upon receiving the one or more messages corresponding to the pattern, the second wearable electronic device may be configured to illuminate and/or vibrate two or more electronic beads of the electronic device corresponding to second electronic bead 16b and third electronic bead 16c to replicate the pattern of the first user.

The second user may then respond to the first user by sending a single touch or pattern of touches back to first user by providing a touch input to one or more electronic beads of the second wearable electronic device corresponding to the first user. In still another example operation, the first user may send an interaction to a multiple of users by providing a touch input to an electronic bead 16a-16f corresponding to each particular user.

In one or more embodiments, communication module 18 of a first wearable electronic device associated with a first user may communicate with a first wireless device associated with the first user, such as a first smartphone. First wireless device may then communicate with a second wireless device associated with a second user via one or more wireless networks. The second wireless device may further communicate with a communication module of a second wearable electronic device. In this manner, touch inputs between electronic beads of different wearable electronic devices may be relayed. In still other embodiments, the communication module of the first wearable electronic device may communicate with the communication module of the second wearable electronic device directly without requiring use of the first wireless device or the second wireless device.

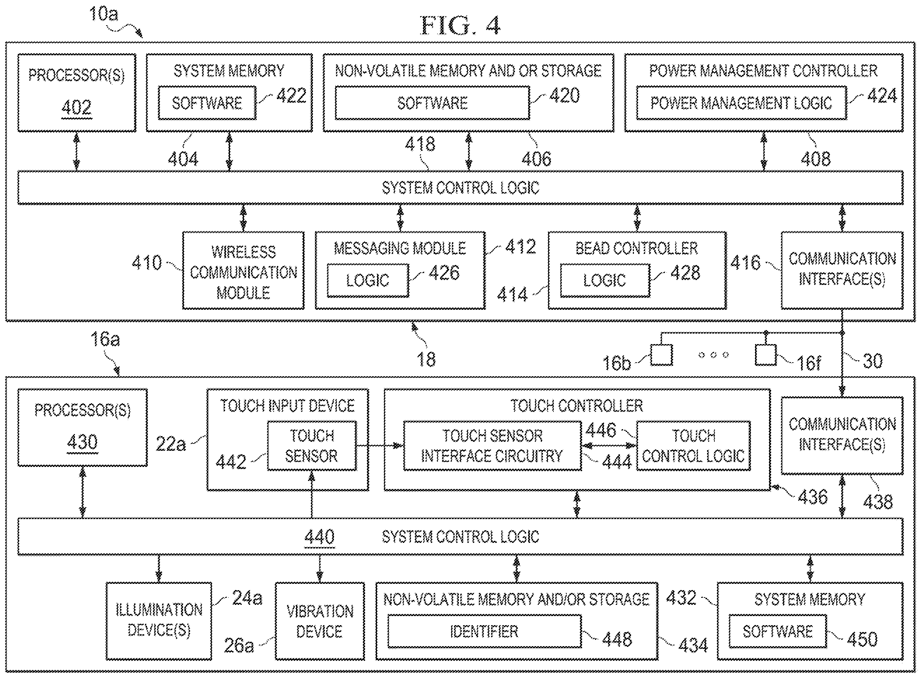

FIGURE 4 is a simplified block diagram illustrating example logic that may be used to execute activities associated with wearable electronic device 10a as discussed herein. In at least one example embodiment, communication module 18 may include one or more processors 402, a system memory 404, a non-volatile memory and/or storage 406, a power management controller 408, wireless communication module 410, messaging module 412, bead controller 414, one or more communication interfaces 416 each of which is coupled to system control logic 418.

System control logic 418, in at least one embodiment, can include any suitable interface controllers to provide for any suitable interface to at least one processor 402 and/or to any suitable device or component in communication with system control logic 418. System control logic 418, in at least one embodiment, can include one or more memory controllers to provide an interface to system memory 404. System memory 404 may be used to load and store data and/or instructions, for example, for communication module 18. System memory 404, in at least one embodiment, can include any suitable volatile memory, such as suitable dynamic random access memory (DRAM) for example. System memory 404 may store suitable software 422 to facilitate various operations of communication module 18.

Non-volatile memory and/or storage device(s) 406 may be used to store data and/or instructions, for example within software 420. Non-volatile memory and/or storage device(s) 406 may include any suitable non-volatile memory, such as flash memory for example, and/or may include any suitable non-volatile storage device(s), such as one or more hard disc drives (HDDs), solid state drives (SSDs), etc. for example.

Power management controller 408 may include power management logic 424 configured to control various power management and/or power saving functions. In at least one example embodiment, power management controller 408 is configured to reduce the power consumption of components or devices of wearable electronic device 10a that may either be operated at reduced power or turned off when wearable electronic device 10a is in an inactive state (e.g., not being accessed, etc.). For example, in at least one embodiment, when wearable electronic device 10a is in an inactive state, power management controller 408 may perform one or more of the following: allow one or more of processor(s) 402 to go to a lower power state if less computing power is required during times of inactivity; and shutdown any devices and/or components that may be unused when wearable electronic device 10a is in an inactive state. System control logic 418, in at least one embodiment, can include one or more I/O controllers to provide an interface to any suitable input/output device(s).

For at least one embodiment, at least one processor 402 may be packaged together with logic for one or more controllers of system control logic 418. In at least one embodiment, at least one processor 402 may be packaged together with logic for one or more controllers of system control logic 418 to form a System in Package (SiP). In at least one embodiment, at least one processor 402 may be integrated on the same die with logic for one or more controllers of system control logic 418. For at least one embodiment, at least one processor 402 may be integrated on the same die with logic for one or more controllers of system control logic 418 to form a System on Chip (SoC).

Wireless communication module 410 (e.g., Wi-Fi module, Bluetooth™ module, near field communication (NFC) module, or other wireless communication circuitry) is configured to allow communication module 18 of wearable electronic device 10a to communicate with one or more other electronic devices (wearable or not wearable) on a network through a wireless connection. The wireless connection may be any 3G/4G/LTE cellular wireless connection, WiFi/WiMAX connection, Bluetooth™ connection, or some other similar wireless connection. In one or more embodiments, the wireless communication circuitry can be configured to provide for two-way radio communications with another two-way radio capable device. In an embodiment, a plurality of antennas can be provisioned in conjunction with communication module 18, which may be associated with wireless connection activities. The antennas are reflective of electrical components that can convert electric currents into radio waves or radio signals. Wireless communication module 410 may include logic to determine a best mode of communication using various signal measurement techniques, including, but not limited to, wireless beacons (to locate one or more Wi-Fi networks), received signal strength indicator (RSSI), link quality indicator (LQI), measurement reports for one or more 3G/4G/LTE cellular wireless connections, combinations thereof or the like.

Messaging module 412 may include logic 426 configured to perform the various abstracted messaging functions described herein. Bead controller 414 may include logic 428 configured to control various operations of electronic beads 16a-16f of wearable electronic device 10a such as receiving touch inputs from one or more of electronic beads 16a-16f, controlling illumination of one or more electronic beads 16a-16f, and/or controlling vibration of one or more electronic beads 16a-16f. Communication interfaces(s) 416 is configured to be coupled to communication bus 30 to interface one or more components of communication module 18 with one or more components of electronic beads 16a-16f.

First electronic bead 16a includes, in at least one embodiment, one or more processors 430, a system memory 432, a non-volatile memory and/or storage 434, touch input device 22a, touch controller 436, one or more communication interfaces 438, one or more illumination devices 24a, a vibration device 26a, each of which is coupled to system control logic 440. Touch input device 22a may further include a touch sensor 442, and touch controller 436 may include touch sensor interface circuitry 444 coupled to touch sensor 442 to detect touch input(s) from the user. Touch sensor interface circuitry 444 may include any suitable circuitry that may depend, for example, at least in part on the touch-sensitive technology used for touch input device 18a. Further for touch control, touch controller 436 may include touch control logic 446 coupled to touch sensor interface circuitry 444 to help control touch sensor interface circuitry 444 in any suitable manner to detect touch input from the user. For touch control, touch control logic 446 for at least one example embodiment may also be coupled to system control logic 440 to output in any suitable manner digital touch input data corresponding to one or more touch inputs detected by touch sensor interface circuitry 444. Touch control logic 446 may be implemented using any suitable logic, including any suitable hardware, firmware, and/or software logic (e.g., non-transitory tangible media), that may depend, for example, at least in part on the circuitry used for touch sensor interface circuitry 444.

Illumination device(s) 24a may be configured to provide a visual indication to a first user of wearable electronic device 10a in response to first electronic bead 16a receiving one or more of a touch input or communication module 18 receiving a signal initiated by a second user associated with first electronic bead 16a from a second wearable electronic device. Similarly, vibration device 26a may be configured to provide a vibration to first electronic bead 16a in response to first electronic bead 16a receiving one or more of a touch input or communication module 18 receiving a signal initiated by a second user associated with first electronic bead 16a from a second wearable electronic device.

In various embodiments, non-volatile memory and/or storage 434 includes a device identifier 448 associated with first electronic bead 16a to uniquely identify first electronic bead 16a from among a plurality of electronic beads. System memory 432 may be used to load and store data and/or instructions, for example, for first electronic bead 16a. System memory 432, in at least one embodiment, can include any suitable volatile memory, such as suitable dynamic random access memory (DRAM) for example. System memory 432 may store suitable software 422 to facilitate various operations of communication module 18.

Hence, the basic building blocks of any wearable electronic device system (e.g., processor, controller, memory, I/O, display, etc.) can be used in conjunction with the teachings of the present disclosure. Certain components could be discrete or integrated into a System on Chip (SoC). Some general system implementations can include certain types of form factors in which charm device 16a is part of a more generalized enclosure. In alternate implementations, instead of wearable electronic devices, certain alternate embodiments deal with mobile phones, tablet devices, etc.

In one or more embodiments, communication module 18 and electronic beads 16a-16f may be configured to operate using a replaceable battery, or in some cases, may be configured to operate using a rechargeable battery, each of which may be housed in communication module 18. In some embodiments, communication module 18 may include charging contacts configured on the outer surface thereof, which can be used in combination with a charging device to facilitate charging a rechargeable battery within communication module 18. Virtually any means may be used to provide power and/or charging for communication module 18 and electronic beads 16a-16f, and, thus, are clearly within the scope of the present disclosure.

For purposes of illustrating certain example features of wearable electronic device 10a (and 10b, discussed below) the following foundational information may be viewed as a basis from which the present disclosure may be properly explained. Wearable electronic devices and electronic devices, such as mobile phones, often provide a means to communicate messages, but these means often involve a user to physically type a message into the device using a digital keyboard displayed on the device. Some devices may provide enhanced messaging input modes where a user may swipe letters together to form a word or message, but these input modes still require the user's attention to focus on a keyboard and connect letters to form a word or message. Some devices may also provide auto-complete features where a word or phrase may be completed after inputting a few letters of a word or a predetermined sequence of letters, but these input modes also require the user to concentrate on inputting letters on a keyboard. These problems are amplified in the case of wearable electronic devices, which typically have a smaller form factor than mobile phones and, thus, make inputting messages even more difficult, even under normal situations. In addition, existing electronic devices are explicit in the messages that they send to other devices. These direct messages may include for example, pictures, text, or email messages. Further, existing digital interactions between users are dependent upon a user's direct interaction with a user's main communication device, such as a mobile phone, to provide communication between users. Such messaging input modes can be burdensome when a user may active, for example, walking, running, playing sports or performing some other activity to which the user's attention may be focused.

Various embodiments provide for a wearable electronic device configured to allow a user to communicate with specific members of a group such as family, friends, social group members, and/or co-workers by interacting with electronic beads of the wearable electronic device in which each electronic bead may be associated with a different member of the group, or alternately, more than one electronic bead may be associated with the same member. In certain embodiments, the user is able to interact with a specific electronic bead or a sequence of electronic beads to send a message such as pulse, pattern or other unique gesture to another user associated with the specific electronic bead or number of beads, or to interact with multiple electronic beads to send messages to a number of different users associated with the electronic beads. In one or more embodiments, the wearable electronic device allows the user to send an abstract message to another user rather than having to directly type a direct message. For example, a user may send a pattern to his brother indicating the user is thinking of him at that moment. In another example, the user may interact with one or more electronic beads to send a "warm glow" to a person to signify that he is providing "thought and energy" to the person. In accordance with various embodiments, a second user receiving such a message from the first user may use another wearable electronic device associated with the second user to send a response message to the wearable electronic device of the first user.

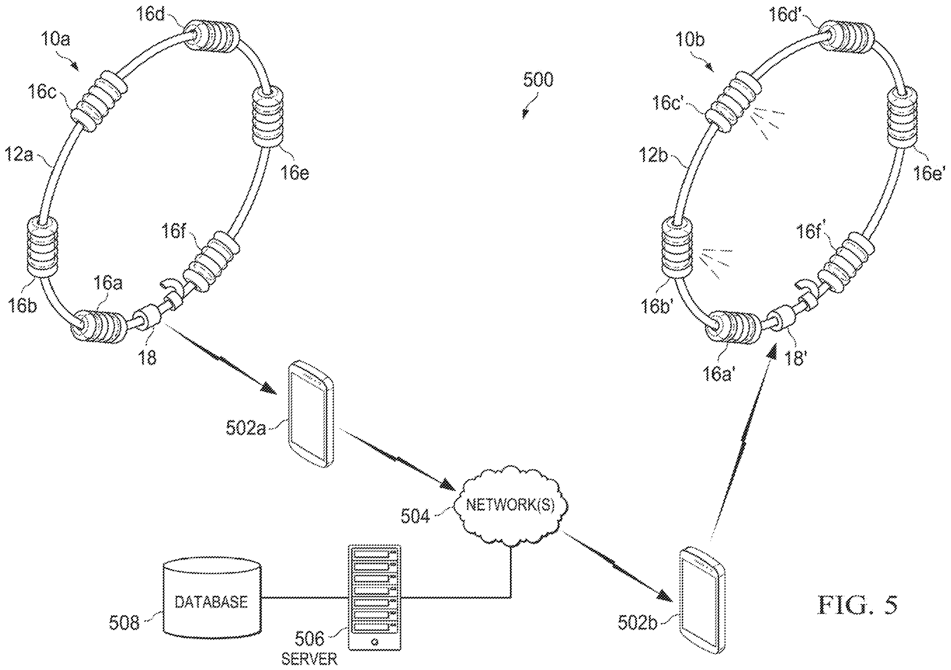

Referring now to FIGURE 5, FIGURE 5 is a simplified block diagram illustrating an embodiment of a communication system 500 for wireless communication between wearable electronic devices. Communication system 500 includes a first wearable electronic device 10a, a first electronic communication device 502a, a second wearable electronic device 10b, a second electronic communication device 502b, one or more networks 504, a server 506, and a database 508. In at least one embodiment, first wearable electronic device 10a is in communication with first electronic communication device 502a via a first wireless connection, and second wearable electronic device 10b is in communication with second electronic communication device 502b via a second wireless connection. In at least one embodiment, first electronic communication device 502a is in communication with network(s) 504 via a third wireless connection, and second electronic communication device 50b is in communication with network(s) 504 via a fourth wireless connection. In particular embodiments, one or more of the first wireless connection, second wireless connection, third wireless connection, and fourth wireless connection may be any 3G/4G/LTE cellular wireless, WiFi/WiMAX connection, Bluetooth™ or some other similar wireless connection.

Network(s) 504 may be a series of points or nodes of interconnected communication paths for receiving and transmitting packets of information that propagate through network(s) 504. Network(s) 504 offers a communicative interface and may include any local area network (LAN), wireless local area network (WLAN), metropolitan area network (MAN), Intranet, Extranet, WAN, virtual private network (VPN), cellular network or any other appropriate architecture or system that facilitates communications in a network environment. Network(s) 504 can comprise any number of hardware or software elements coupled to (and in communication with) each other through a communications medium. First electronic communication device 502a and second communication device 502b may be a computer (e.g., notebook computer, laptop, tablet computer or device), a phablet, a cellphone, a personal digital assistant (PDA), a smartphone, a movie player of any type, router, access point, another wearable electronic device or other device that includes a circuit board coupled to a plurality of electronic components (which includes any type of components, elements, circuitry, etc.). In one or more embodiments, first wearable electronic device 10a and first electronic communication device 502a are associated with a first user, and second wearable electronic device 10b and second electronic communication device 502b are associated with a second user.

Server 506 is in communication with network(s) 504 and in further communication with database 508. In one or more embodiments, server 506 is configured to receive a message or messages initiated by the first user touching one or more of electronic beads 16a-16f affixed to first bracelet portion 12a and transmitted by communication module 18 of wearable electronic device 10a, determine one or more electronic beads 16a'-16e' attached to second bracelet portion 12b of second wearable electronic device 10b to which the message or messages should be directed, and relay the one or more messages to one or more of charm devices 16a'-16e'. In one or more embodiments, database 508 may include one or more records including a first user identifier (User ID #1) associated with the first user of first wearable electronic device 10a and one or more device identifiers (Device ID #1 - Device ID #6) associated with each of electronic beads 16a-16f. The first user identifier may be further associated with a second user identifier (User ID #2) that is further associated with a second user of second wearable electronic device 10b. Each of the device identifiers of electronic beads 16a-16f of first wearable electronic device 10a may be associated with a corresponding device identifier (Device ID #7 - Device ID #12) associated with electronic beads 16a'-16f' of second wearable electronic device 10b.

An example database record for the first user of first wearable electronic device 10a is as follows:

| User ID #1 (first user) | User ID #2 (second user) |
|---|---|
| Device ID #1 (electronic bead 16a) | Device ID #7 (electronic bead 16a') |
| Device ID #2 (electronic bead 16b) | Device ID #8 (electronic bead 16b') |
| Device ID #3 (electronic bead 16c) | Device ID #9 (electronic bead 16c') |
| Device ID #4 (electronic bead 16d) | Device ID #10 (electronic bead 16d') |
| Device ID #5 (electronic bead 16e) | Device ID #11 (electronic bead 16e') |
| Device ID #6 (electronic bead 16f) | Device ID #12 (electronic bead 16f') |

In a particular embodiment, User ID #1 is a mobile telephone number associated with first electronic communication device 502a, and User ID #2 is a mobile telephone number associated with second electronic communication device 502b.

In accordance with various embodiments, the first user of first wearable electronic device 10a may initiate a registration process to register wearable electronic device 10a with server 506 in which User ID#1, Device ID #1 - Device ID #6, and User ID #2 is provided to a software application associated with first electronic communication device 502a, and first electronic communication device 502a sends User ID#1, Device ID #1 - Device ID #6, and User ID #2 to server 506. Server 506 then stores Device ID #1 - Device ID #6 and User ID #2 in a database record associated with User ID #1. In a particular embodiment, In particular embodiments, the first user may provide User ID #2 to first electronic communication device 502a by the first user selecting a name associated with User ID #2 from a contact list and associating User ID #2 with Device ID #1 using a user interface provided by first electronic communication device 502a.

In accordance with various embodiments, the second user may associate second wearable electronic device 10b with the first user in order to associate electronic beads 16a'-16f' attached to second bracelet portion 12b of second wearable electronic device 10b with corresponding electronic beads 16a-16f of first wearable electronic device 10a and store the associations within server 506.

In example operations associated with FIGURE 5, the first user may interact with electronic bead 16b and electronic bead 16c of first wearable electronic device 10a. For example, the first user may input a pattern of touch inputs to electronic bead 16b and electronic bead 16c. Communication module 18 of first wearable electronic device 10a may then send one or more first messages including information indicative of the interaction input including Device ID #2 and Device ID #3 to first electronic communication device 502a. First electronic device 502a then sends a second message including the interaction indication, Device ID #2, Device ID #3, and User ID #1 to server 506. Server 506 then may determine that the second message is directed to User ID #2 by referencing the associations stored within database 508. Server 506 may then send a third message to second electronic communication device 502b including information indicative of the interaction pattern, Device ID #8 associated with electronic bead 16b' and Device ID #9 associated with electronic bead 16c'. Second electronic communication device 502b may then send a fourth message to communication module 18' of second wearable electronic device 10b. In response, communication module 18' may instruct electronic bead 16b' and electronic bead 16c' to provide sensory output to the second user indicative of the interaction pattern. In a particular embodiment, electronic bead 16b' and electronic bead 16c' may provide one or more of an illumination and/or vibration output to the second user to replicate the pattern or sequence inputted by the first user.

In accordance with various embodiments, the second user may send a response to the first user using a touch input on one or more of electronic beads 16a'-16f', and one or more outputs indicative of the response may be provided to the first user by electronic beads 16a-16f of first wearable electronic device 10a.

Although the embodiment of FIGURE 5 is illustrated as using first electronic communication device 502a second electronic communication device 502b, server 506, and database 508, it should be understood that in other alternative embodiments one or more of first electronic communication device 502a second electronic communication device 502b, server 506, and database 508 may be omitted. In particular embodiments, communication module 18 of first wearable electronic device 10a and communication module 18' of second wearable electronic device 10b may communicate directly with one another without requiring the user of first electronic communication device 502a, second electronic communication device 502b, server 506, and/or database 508.

In an alternative embodiments, one or more of electronic beads 16a-16f may provide a visual indication of the identity of a calling user based upon one or more of a pattern illuminated by electronic beads 16a-16f and color of illumination.

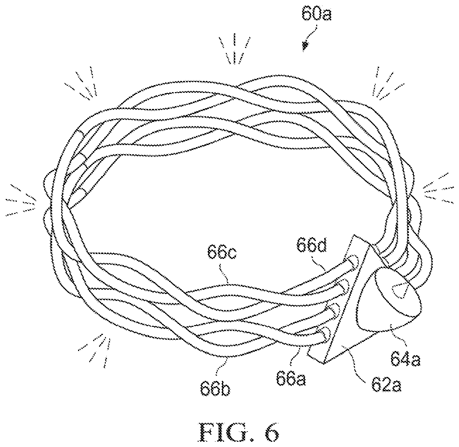

FIGURE 6 is a simplified orthographic view illustrating an abstracted messaging wearable electronic device 60a for wireless communication in accordance with another embodiment of the present disclosure. Wearable electronic device 60a can include a communication module 62 having a timer input device 64, a first fiber optical light strand 66a, a second fiber optical light strand 66b, a third fiber optical light strand 66c, and a fourth fiber optical light strand 66d. In the particular embodiment illustrated in FIGURE 6, opposing ends of each of first fiber optical light strand 66a, second fiber optical light strand 66b, third fiber optical light strand 66c, and fourth fiber optical light strand 66d are attached to communication module 62 to form a bracelet portion of wearable electronic device 60a to facilitate attachment of communication module 62 to a user.

In various embodiments, first communication module 62a may be further configured to communicate with other wireless electronic devices such a second wearable electronic device associated with a second user. In one or more embodiments, a first user of wearable electronic device 60a may use timer input device 64a to set a determined message duration. In response, communication module 62 may transmit one or more messages including information indicative of the determined message duration, a first user identifier associated with the first user, and a second user identifier associated with a second user to a second wearable electronic device associated with the second user. In one embodiment, timer input device 64a may include a timer dial in which the user twists the timer dial to a certain position indicative of the length of the message. Upon release of the timer dial, the timer dial may rotate back to its original position as the predetermined message duration elapses. In still other embodiments, timer input device 64a may include a touch input or one or more buttons configured to allow the first user to set the predetermined message duration. Upon receiving the one or more messages, a second communication module of the second wearable electronic device may pulse one or more fiber optical light strands of the second wearable electronic device in a predetermined pattern for the indicated predetermined message duration.

In one or more embodiments, first communication module 62a may be further configured to receive a message from another wearable electronic device including a user identifier associated with the first communication device and information indicative of a determined message duration selected by the second user. In response, first communication module may pulse one or more of first optical light strand 66a, second optical light strand 66b, third optical light strand 66c, and fourth optical light strand 66d in a predetermined pattern for the indicated determined message duration.

In some embodiments, one or more colors illuminated by optical light strands 66a-66d may be indicative an identity of the user sending the message. In still other embodiments, a color illuminated by optical light strands 66a-66d may be indicative of social group that either the second user is a member and/or of which the first user and second user are both members.

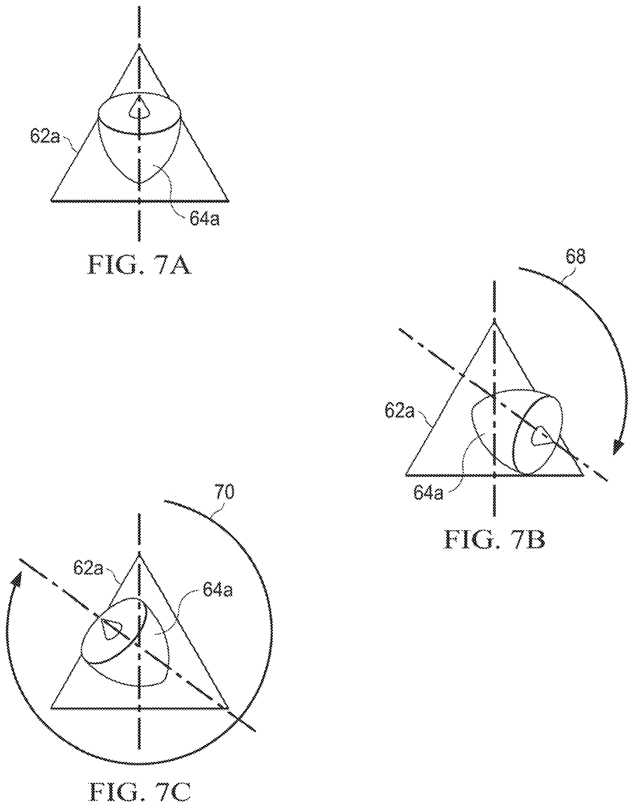

Referring now to FIGURES 7A-7C, FIGURES 7A-7C illustrate an embodiment of example procedures for abstracted messaging using wearable electronic device 60a of FIGURE 6. In FIGURE 7A, timer input device 64a is shown in an idle state in which no time message is currently being transmitted by communication module 62a. In FIGURE 7B, timer input device 64a is shown in a state in which the user has rotated timer input device 64a by an angle 68 to initiate the sending of a message by communication module 62a having a duration determined by angle 68. For example, in a particular embodiment angle 68 represents the user setting a determined duration of the message equal to twenty (20) seconds. In FIGURE 7C, timer input device 64a is shown in a state in which the user has rotated timer input device 64a by an angle 70 to initiate the sending of a message by communication module 62a having a duration determined by angle 70. For example, in a particular embodiment angle 70 may represent the user setting a determined duration of the message equal to forty (40) seconds. In one or more embodiments, timer input device 64a may return to the idle state as illustrated in FIGURE 7A after the determined duration has expired.

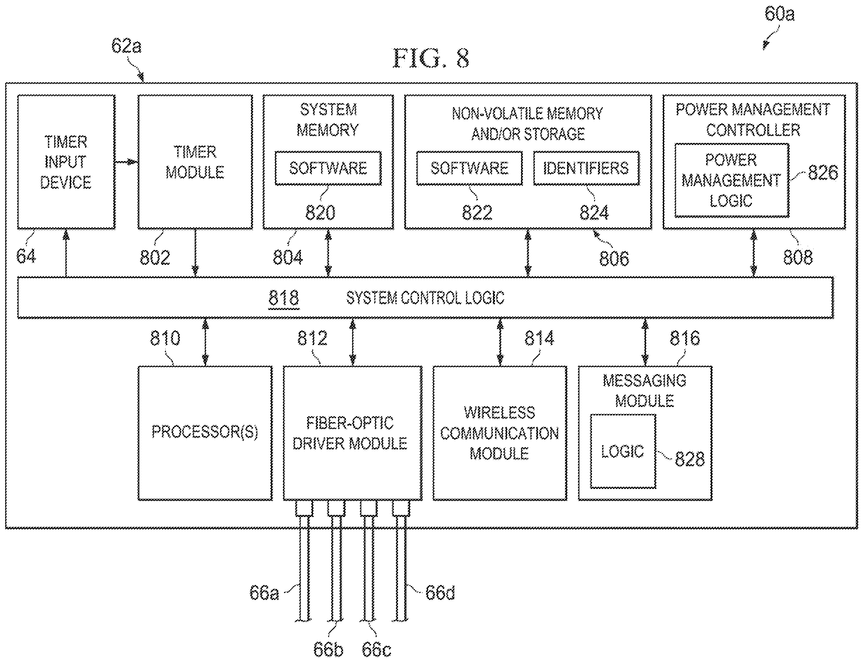

Referring now to FIGURE 8, FIGURE 8 is a simplified block diagram illustrating example logic that may be used to execute activities associated with wearable electronic device 60a as discussed herein. In at least one example embodiment, wearable electronic device 60a can include a communication module 62a having timer input device 64, a timer module 802, a system memory 804, a non-volatile memory and/or storage 806, a power management controller 808, processor(s) 810, a fiber optic driver module 812, wireless communication module 814, and a messaging module 816, each of which is coupled to system control logic 818.

Timer module 802 may be configured to receive a user input from timer input device 64 and initiate a timing function having a determined duration in response to user input from timer input device 64. The timing initiating a timer having the determined duration and providing a signal to one or more of processor(s) 810 and messaging module 816 indicating that a message is to be transmitted by communication module 62a.

System control logic 818, in at least one embodiment, can include any suitable interface controllers to provide for any suitable interface to processor(s) 810 and/or to any suitable device or component in communication with system control logic 418. System control logic 818, in at least one embodiment, can include one or more memory controllers to provide an interface to system memory 804. System memory 804 may be used to load and store data and/or instructions, for example, for communication module 62a. System memory 804, in at least one embodiment, can include any suitable volatile memory, such as suitable dynamic random access memory (DRAM) for example. System memory 804 may store suitable software 820 and/or non-volatile memory and/or storage device(s).

Non-volatile memory and/or storage device(s) 806 may be used to store data and/or instructions, for example within software 822. Non-volatile memory and/or storage device(s) 806 may include any suitable non-volatile memory, such as flash memory for example, and/or may include any suitable non-volatile storage device(s), such as one or more hard disc drives (HDDs), solid state drives (SSDs), etc. for example. In various embodiments, non-volatile memory and/or storage 406 includes device identifiers 824 associated with each of optical light strands 66a-66d to uniquely each of optical light strands 66a-66d.

Power management controller 808 may include power management logic 826 configured to control various power management and/or power saving functions. In at least one example embodiment, power management logic 826 is configured to reduce the power consumption of components or devices of wearable electronic device 60a that may either be operated at reduced power or turned off when the wearable electronic device is in an inactive state (e.g., not being accessed, etc.). For example, in at least one embodiment, when wearable electronic device 60a is in an inactive state, power management logic 826 may perform one or more of the following: allow one or more of processor(s) 810 to go to a lower power state if less computing power is required during times of inactivity; and shutdown any devices and/or components that may be unused when wearable electronic device 60a is in an inactive state. System control logic 818, in at least one embodiment, can include one or more I/O controllers to provide an interface to any suitable input/output device(s), for example, an audio device to help convert sound into corresponding digital signals and/or to help convert digital signals into corresponding sound, a camera and/or a video recorder.

For at least one embodiment, processor(s) 810 may be packaged together with logic for one or more controllers of system control logic 818. In at least one embodiment, processor(s) 810 may be packaged together with logic for one or more controllers of system control logic 818 to form a System in Package (SiP). In at least one embodiment, processor(s) 810 may be integrated on the same die with logic for one or more controllers of system control logic 818. For at least one embodiment, processor(s) 810 may be integrated on the same die with logic for one or more controllers of system control logic 818 to form a System on Chip (SoC).

Fiber optic driver module 812 is coupled to each of first optical light strand 66a, second optical light strand 66b, third optical light strand 66c, and fourth optical light strand 66d and configured to drive each of first optical light strand 66a, second optical light strand 66b, third optical light strand 66c, and fourth optical light strand 66d to illuminate along a portion of their respective lengths. In various embodiments, fiber optic driver module 812 may be configured to cause first optical light strand 66a, second optical light strand 66b, third optical light strand 66c, and fourth optical light strand 66d to illuminate in one or more determined colors.

Wireless communication module 814 (e.g., Wi-Fi module, Bluetooth™ module, near field communication (NFC) module, or other wireless communication circuitry) may allow communication module 62a to communicate with one or more other electronic devices (wearable or not wearable) on a network through a wireless connection. The wireless connection may be any 3G/4G/LTE cellular wireless connection, WiFi/WiMAX connection, Bluetooth™ connection, or some other similar wireless connection. In one or more embodiments, the wireless communication circuitry can be configured to provide for two-way radio communications with another two-way radio capable device. In an embodiment, a plurality of antennas can be provisioned in conjunction with communication module 62, which may be associated with wireless connection activities. The antennas are reflective of electrical components that can convert electric currents into radio waves or radio signals. communication module 62a may include logic to determine a best mode of communication using various signal measurement techniques, including, but not limited to, wireless beacons (to locate one or more Wi-Fi networks), received signal strength indicator (RSSI), link quality indicator (LQI), measurement reports for one or more 3G/4G/LTE cellular wireless connections, combinations thereof or the like. Messaging module 816 may include logic 828 configured to perform the various abstract messaging functions described herein.

In one or more embodiments, communication module 62a may be configured to operate using a replaceable battery, or in some cases, may be configured to operate using a rechargeable battery, each of which may be housed in a housing portion. In some embodiments, communication module 62a may include charging contacts configured on the outer surface of communication module 62a, which can be used in combination with a charging device to facilitate charging a rechargeable battery within communication module 62a. Virtually any means may be used to provide power and/or charging for communication module 62a, and, thus, are clearly within the scope of the present disclosure.

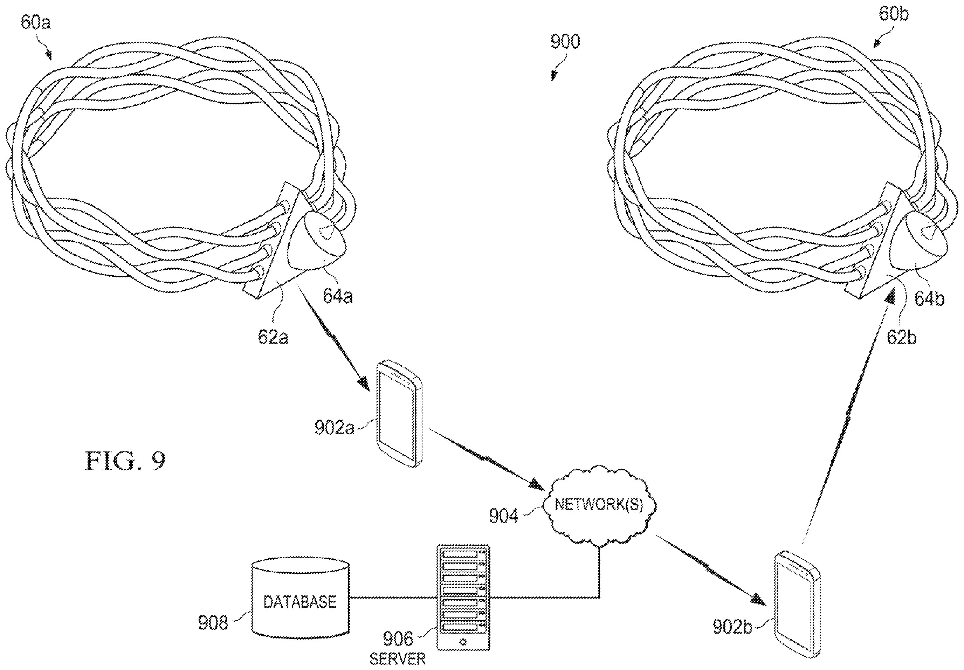

FIGURE 9 is a simplified block diagram illustrating another embodiment of a communication system 900 for wireless communication between wearable electronic devices. Communication system 900 includes a first wearable electronic device 60a, a first electronic communication device 902a, one or more network(s) 904, a second wearable electronic device 60b, a second electronic communication device 902b, a server 906, and a database 908. In at least one embodiment, first wearable electronic device 60a is in communication with first electronic communication device 902a via a first wireless connection, and second wearable electronic device 60b is in communication with second electronic communication device 902b via a second wireless connection. In at least one embodiment, first electronic communication device 902a is in communication with network(s) 904 via a third wireless connection, and second electronic communication device 60b is in communication with network(s) 904 via a fourth wireless connection.

Network(s) 904 may be a series of points or nodes of interconnected communication paths for receiving and transmitting packets of information that propagate through network(s) 904. First electronic communication device 902a and second communication device 902b may be a computer (e.g., notebook computer, laptop, tablet computer or device), a phablet, a cellphone, a personal digital assistant (PDA), a smartphone, a movie player of any type, router, access point, another wearable electronic device or other device that includes a circuit board coupled to a plurality of electronic components (which includes any type of components, elements, circuitry, etc.). In one or more embodiments, first wearable electronic device 60a and first electronic communication device 902a are associated with a first user, and second wearable electronic device 60b and second electronic communication device 902b are associated with a second user.

Server 906 is in communication with network(s) 904 and in further communication with database 908. In one or more embodiments, server 906 is configured to receive a timed message or messages initiated by the first user of first wearable electronic device 60a, determine one or more optical light strands attached of second wearable electronic device 60b that should be illuminate in response to the message or messages, and relay the one or more messages to second communication module 62b of second wearable electronic device 60b. In one or more embodiments, database 908 may include one or more records including a first user identifier associated with the first user of first wearable electronic device 60a and one or more identifiers associated with each of optical light strands 66a-66d. The first user identifier may be further associated with a second user identifier that is further associated with a second user of second wearable electronic device 60b.

In example operations associated with FIGURE 9, the first user may interact with first timer input device 64a of first wearable electronic device 60a to set a determined message duration. Communication module 62a of first wearable electronic device 60a may then send one or more first messages including information indicative of the timed duration to first electronic communication device 902a. First electronic device 902a then sends a second message including information indicative of the determined message duration and the first user identifier to server 906. Server 506 then may determine that the second message is directed to the second user associated with second wearable electronic device 60b by referencing the associations stored within database 508. Server 906 may then send a third message to second electronic communication device 902b including information indicative of the determined duration. Second electronic communication device 902b may then send a fourth message to second communication module 62b of second wearable electronic device 60b. In response, communication module 62b may illuminate one or more of first optical light strand 66a, second optical light strand 66b, third optical light strand 66c, and fourth optical light strand 66d to provide sensory output to the second user indicative of the determine duration. In a particular embodiment, one or more of optical light strands 66a-66d may be pulsed for the determined duration in a predetermined pattern.

In accordance with various embodiments, the second user may send a response message to first communication module 62a of first wearable electronic device 60a of another determined duration that is set using second timer input device 64b. Upon receiving the response message, first communication module 62a may illuminate one or more of optical light strands 66a-66d for the other determined duration.

Although the embodiment of FIGURE 9 is illustrated as using first electronic communication device 902a second electronic communication device 902b, server 906, and database 908, it should be understood that in other alternative embodiments one or more of first electronic communication device 902a second electronic communication device 902b, server 906, and database 908 may be omitted. In particular embodiments, communication module 62a of first wearable electronic device 60a and communication module 62b of second wearable electronic device 60b may communicate directly with one another without requiring the user of first electronic communication device 902a, second electronic communication device 902b, server 906, and/or database 908.

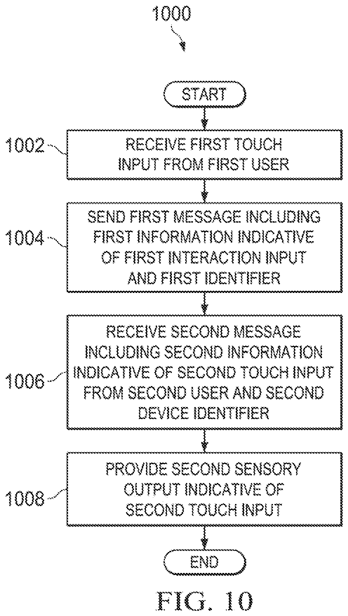

Referring now to FIGURE 10, FIGURE 10 is a simplified flow diagram 1000 illustrating potential operations for wearable electronic device 10a in accordance with one embodiment of the present disclosure. The operations may be used to communicate a first message indicative of a first touch input by a first user to another wearable electronic device of a second user, receive a second message indicative of a second touch input by the second user using the other wearable electronic device, and provide a sensory output to the first user indicative of the second touch input.

In 1002, communication module 18 in communication with at least one electronic bead 16a-16f receives a first touch input from the at least one electronic bead. In particular embodiments, the at least one electronic bead 16a-16f receives the first touch input from a first user associated with the wearable electronic device 10a. In 1004, communication module 18 sends a first message including first information indicative of the first touch input and a first device identifier associated with the at least one electronic bead to an electronic device associated with a second user.

In particular embodiments, wearable electronic device 10a further includes a bracelet portion, and the at least one electronic bead and the communication module are configured to be affixed to the bracelet portion. In some embodiments, the first device identifier is further associated with the second user. In various embodiments, the electronic device associated with the second user includes another wearable electronic device. In still other embodiments, the electronic device associated with the second user is configured to provide a first sensory output indicative of the first touch input. In a particular embodiment, the association of the first device identifier with the second user is performed by the first user.

In one or more embodiments, the first touch input includes a pattern of touch inputs provided to a plurality of electronic beads of the wearable electronic device, and the first message includes first information indicative of the pattern of touch inputs.

In 1006, communication module 18 receives a second message including second information indicative of a second touch input provided to the electronic device associated with the second user, and a second device identifier associated with the electronic device associated with the second user. In particular embodiments, the second device identifier is further associated with the first user.

In 1008, at least one sensory output device associated with the at least one electronic bead provides a second sensory output indicative of the second touch input and the operations end. In particular embodiments, the at least one sensory output device includes at least one of an illumination device and a vibration device. In other particular embodiments, the second touch input includes a pattern of touch inputs provided to the electronic device associated with the second user, and wherein the second information is indicative of the pattern of touch inputs. In still other particular embodiments, communication module 18 may be further configured to cause a sensory output device of each of a plurality of electronic beads to provide a sensory output indicative of the pattern of touch inputs.

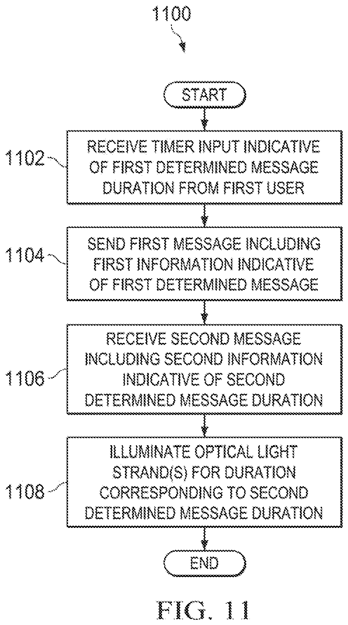

Referring now to FIGURE 11, FIGURE 11 is a simplified flow diagram 1100 illustrating potential operations for wearable electronic device 60a in accordance with another embodiment of the present disclosure. In 1102, communication module 62a receives a timer input indicative of a first determined message duration from a first user associated with the wearable electronic device. In particular embodiments, communication module 18 includes a timer input device configured to receive the timer input from the first user. In 1104, communication module 62a sends a first message including first information indicative of the first determined message duration to an electronic device associated with a second user. In one or more embodiments, the electronic device associated with the second user is configured to provide an illumination output for a duration corresponding to the first determined message duration.

In 1106, communication module 62a receives a second message including second information indicative of a second determined message from the electronic device associated with the second user. In 1108, communication module 62a causes at least one of optical light strands 16a-16f in communication with communication module 62a to illuminate for a duration corresponding to the second determined message duration and the operations end. In one or more embodiments, the at least one optical strand comprises a bracelet portion of the wearable electronic device.

The example means and method described above are only a few of the many means and methods that may be used to communicate using wearable communication device 10. Virtually any other means could be used, and, thus are clearly within the scope of the present disclosure.

Note that in some example implementations, the functions outlined herein may be implemented in conjunction with logic that is encoded in one or more tangible, non-transitory media (e.g., embedded logic provided in an application-specific integrated circuit (ASIC), in digital signal processor (DSP) instructions, software [potentially inclusive of object code and source code] to be executed by a processor, or other similar machine, etc.). In some of these instances, memory elements can store data used for the operations described herein. This can include the memory elements being able to store software, logic, code, or processor instructions that are executed to carry out the activities described herein. A processor can execute any type of instructions associated with the data to achieve the operations detailed herein. In one example, the processors could transform an element or an article (e.g., data) from one state or thing to another state or thing. In another example, the activities outlined herein may be implemented with fixed logic or programmable logic (e.g., software/computer instructions executed by a processor) and the elements identified herein could be some type of a programmable processor, programmable digital logic (e.g., a field programmable gate array (FPGA), a DSP, an erasable programmable read only memory (EPROM), electrically erasable programmable read-only memory (EEPROM)) or an ASIC that can include digital logic, software, code, electronic instructions, or any suitable combination thereof.

Program instructions may be used to cause a general-purpose or special-purpose processing system that is programmed with the instructions to perform the operations described herein. Alternatively, the operations may be performed by specific hardware components that contain hardwired logic for performing the operations, or by any combination of programmed computer components and custom hardware components. The methods described herein may be provided as a computer program product that may include one or more non-transitory, tangible, machine readable media having stored thereon instructions that may be used to program a processing system or other electronic device to perform the methods. The term "machine readable medium" used herein shall include any medium that is capable of storing or encoding a sequence of instructions for execution by the machine and that cause the machine to perform any one of the methods described herein. The term "non-transitory machine readable medium" shall accordingly include, but not be limited to, memories* such as solid-state memories, optical and magnetic disks. Furthermore, it is common in the art to speak of software, in one form or another (e.g., program, procedure, process, application, module, logic, and so on) as taking an action or causing a result. Such expressions are merely a shorthand way of stating that the execution of the software by a processing system causes the processor to perform an action or produce a result.

It is imperative to note that all of the specifications, dimensions, and relationships outlined herein (e.g., width, length, thickness, materials, etc.) have only been offered for purposes of example and teaching only. Each of these data may be varied considerably without departing from the spirit of the present disclosure, or the scope of the appended claims. The specifications apply only to one non-limiting example and, accordingly, they should be construed as such. In the foregoing description, example embodiments have been described. Various modifications and changes may be made to such embodiments without departing from the scope of the appended claims. The description and drawings are, accordingly, to be regarded in an illustrative rather than a restrictive sense.

Numerous other changes, substitutions, variations, alterations, and modifications may be ascertained to one skilled in the art and it is intended that the present disclosure encompass all such changes, substitutions, variations, alterations, and modifications as falling within the scope of the appended claims. In order to assist the United States Patent and Trademark Office (USPTO) and, additionally, any readers of any patent issued on this application in interpreting the claims appended hereto, Applicant wishes to note that the Applicant: (a) does not intend any of the appended claims to invoke paragraph six (6) of 35 U.S.C. section 112 as it exists on the date of the filing hereof unless the words "means for" or "step for" are specifically used in the particular claims; and (b) does not intend, by any statement in the specification, to limit this disclosure in any way that is not otherwise reflected in the appended claims.

## Claims

1. A method for communicating using a wearable electronic device, comprising:
receiving (1002), by at least one of a plurality of electronic modules of a wearable electronic device, a first touch input from a first user of the wearable electronic device;
receiving, by a communication module (18) in communication with the plurality of electronic modules, the first touch input from the at least one electronic module; and
sending (1004) one or more messages including first information indicative of the first touch input and a first device identifier associated with the at least one electronic module to a corresponding electronic device of a second user, **characterised in that**:
the plurality of electronic modules are electronic beads;
the first touch input includes a pattern of touches sensed by touch sensors on the electronic beads of the wearable electronic device; and
wherein when after a touch is sensed for a predetermined period of time, the sending of one or more messages is initiated, whereby said first information in said one or more messages is also indicative of the pattern of touch inputs; and
the wearable electronic device associated with the second user is configured to receive the one or more messages corresponding to the pattern and to illuminate and/or vibrate one or more electronic beads to replicate the pattern of touch inputs.

2. The method of claim 1, wherein the at least one electronic bead and the communication module (18) are configured to be affixed to a bracelet portion (12) of the wearable electronic device.

3. The method of any of claims 1-2, wherein the first device identifier is further associated with the second user.

4. The method of any of claims 1-3, wherein the electronic device of the second user is configured to provide a first sensory output indicative of the first touch input.

5. The method of any of claims 1-4, wherein the association of the first device identifier with the second user is performed by the first user.

6. The method of any of claims 1-5, further comprising receiving (1006) a second message including second information indicative of a second touch input provided to the electronic device of the second user, and a second device identifier associated with the electronic device of the second user.

7. The method of claim 6, further comprising providing (1008) a second sensory output indicative of the second touch input by at least one sensory output device associated with the at least one electronic bead.

8. The method of any of claims 6-7, wherein the second device identifier is further associated with the first user.

9. The method of any of claims 6-8, wherein the second touch input includes a pattern of touch inputs provided to the electronic device of the second user, and wherein the second information is indicative of the pattern of touch inputs.

10. A wearable electronic device (10, 60) comprising:
a plurality of electronic modules, the plurality of electronic modules are electronic beads (16); and
a communication module (18) in communication with the electronic beads, the communication module including a processor configured to carry out the method of any one of claims 1 to 9.

## Patentansprüche

1. Verfahren zum Kommunizieren mithilfe einer tragbaren elektronischen Vorrichtung, umfassend:
Empfangen (1002), durch mindestens eines einer Mehrzahl von elektronischen Modulen einer tragbaren elektronischen Vorrichtung, einer ersten Berührungseingabe von einem ersten Benutzer der tragbaren elektronischen Vorrichtung;
Empfangen, durch ein Kommunikationsmodul (18) in Kommunikation mit der Mehrzahl von elektronischen Modulen, der ersten Berührungseingabe von dem mindestens einen elektronischen Modul; und
Senden (1004) einer oder mehrerer Nachrichten umfassend eine erste Information, die die erste Berührungseingabe und eine dem mindestens einen elektronischen Modul zugeordnete erste Vorrichtungskennung anzeigt, an eine entsprechende elektronische Vorrichtung eines zweiten Benutzers, **dadurch gekennzeichnet, dass**:
die Mehrzahl von elektronischen Modulen elektronische Perlen sind;
die erste Berührungseingabe ein Muster von Berührungen umfasst, das durch Berührungssensoren an den elektronischen Perlen der tragbaren elektronischen Vorrichtung erfasst wird; und
wobei, wenn nachher eine Berührung für eine vorbestimmte Zeitdauer erfasst wird, das Senden einer oder mehrerer Nachrichten initiiert wird, wobei die erste Information in der einen oder den mehreren Nachrichten auch das Muster von Berührungseingaben anzeigt; und
die dem zweiten Benutzer zugeordnete tragbare elektronische Vorrichtung ausgestaltet ist, die eine oder mehreren Nachrichten entsprechend dem Muster zu empfangen und eine oder mehrere elektronische Perlen zu beleuchten und/oder zu vibrieren, um das Muster von Berührungseingaben nachzubilden.

2. Verfahren nach Anspruch 1, wobei die mindestens eine elektronische Perle und das Kommunikationsmodul (18) ausgestaltet sind, an einem Armbandabschnitt (12) der tragbaren elektronischen Vorrichtung befestigt zu werden.

3. Verfahren nach einem der Ansprüche 1-2, wobei die erste Vorrichtungskennung ferner dem zweiten Benutzer zugeordnet ist.

4. Verfahren nach einem der Ansprüche 1-3, wobei die elektronische Vorrichtung des zweiten Benutzers ausgestaltet ist, eine erste sensorische Ausgabe bereitzustellen, die die erste Berührungseingabe anzeigt.

5. Verfahren nach einem der Ansprüche 1-4, wobei die Zuordnung der ersten Vorrichtungskennung zu dem zweiten Benutzer durch den ersten Benutzer durchgeführt wird.

6. Verfahren nach einem der Ansprüche 1-5, ferner umfassend Empfangen (1006) einer zweiten Nachricht mit einer zweiten Information, die eine der elektronischen Vorrichtung des zweiten Benutzers bereitgestellte zweite Berührungseingabe anzeigt, und einer zweiten Vorrichtungskennung, die der elektronischen Vorrichtung des zweiten Benutzers zugeordnet ist.

7. Verfahren nach Anspruch 6, ferner umfassend Bereitstellen (1008) einer zweiten sensorischen Ausgabe, die die zweite Berührungseingabe anzeigt, durch mindestens eine sensorische Ausgabevorrichtung, die der mindestens einen elektronischen Perle zugeordnet ist.

8. Verfahren nach einem der Ansprüche 6-7, wobei die zweite Vorrichtungskennung ferner dem ersten Benutzer zugeordnet ist.

9. Verfahren nach einem der Ansprüche 6-8, wobei die zweite Berührungseingabe ein Muster von der elektronischen Vorrichtung des zweiten Benutzers bereitgestellten Berührungseingaben umfasst, und wobei die zweite Information das Muster von Berührungseingaben anzeigt.

10. Tragbare elektronische Vorrichtung (10, 60), umfassend:
eine Mehrzahl von elektronischen Modulen, wobei die Mehrzahl von elektronischen Modulen elektronische Perlen (16) sind; und
ein Kommunikationsmodul (18) in Kommunikation mit den elektronischen Perlen, wobei das Kommunikationsmodul einen Prozessor umfasst, der ausgestaltet ist, das Verfahren nach einem der Ansprüche 1 bis 9 auszuführen.

## Revendications

1. Procédé de communication utilisant un dispositif électronique portable, comprenant :
la réception (1002), par au moins l'un d'une pluralité de modules électroniques appartenant à un dispositif électronique portable, d'une première entrée tactile provenant d'un premier utilisateur du dispositif électronique portable,
la réception, par un module de communication (18), en communication avec la pluralité de modules électroniques, de la première entrée tactile issue du ou des modules électroniques, et
l'envoi (1004) d'un ou plusieurs messages incluant des premières informations indicatives de la première entrée tactile, ainsi que d'un premier identificateur de dispositif associé à ce ou à ces modules électroniques, vers un dispositif électronique correspondant appartenant à un second utilisateur, **caractérisé en ce que** :
la pluralité de modules électroniques sont des perles électroniques,
la première entrée tactile inclut un motif de touches détectées par des capteurs tactiles sur les perles électroniques du dispositif électronique portable, et
dans lequel, après qu'une touche a été détectée pendant un intervalle de temps prédéterminé, l'envoi du ou des messages est initié, grâce à quoi lesdites premières informations dans ledit ou lesdits messages indiquent également le motif des entrées tactiles, et
le dispositif électronique portable associé au second utilisateur est configuré pour recevoir le ou les messages correspondant au motif et pour éclairer et/ou faire vibrer une ou plusieurs perles électroniques afin de reproduire le motif des entrées tactiles.

2. Procédé selon la revendication 1, dans lequel la ou les perles électroniques et le module de communication (18) sont configurés pour être fixés à une partie formant bracelet (12) du dispositif électronique portable.

3. Procédé selon l'une quelconque des revendications 1 et 2, dans lequel le premier identificateur de dispositif est en outre associé au second utilisateur.

4. Procédé selon l'une quelconque des revendications 1 à 3, dans lequel le dispositif électronique du second utilisateur est configuré pour fournir une première sortie sensorielle indicative de la première entrée tactile.

5. Procédé selon l'une quelconque des revendications 1 à 4, dans lequel l'association du premier identificateur de dispositif avec le second utilisateur est effectuée par le premier utilisateur.

6. Procédé selon l'une quelconque des revendications 1 à 5, comprenant en outre la réception (1006) d'un second message incluant des secondes informations indicatives d'une seconde entrée tactile procurée au dispositif électronique du second utilisateur, ainsi que d'un second identificateur de dispositif associé au dispositif électronique du second utilisateur.

7. Procédé selon la revendication 6, comprenant en outre la délivrance (1008) d'une seconde sortie sensorielle indicative de la seconde entrée tactile par un dispositif de sortie sensorielle associé à cette ou à ces perles électroniques.

8. Procédé selon l'une quelconque des revendications 6 et 7, dans lequel le second identificateur de dispositif est en outre associé au premier utilisateur.

9. Procédé selon l'une quelconque des revendications 6 à 8, dans lequel la seconde entrée tactile inclut un motif d'entrées tactiles procurées au dispositif électronique du second utilisateur, et dans lequel les secondes informations sont indicatives du motif des entrées tactiles.

10. Dispositif électronique portable (10, 60) comprenant :
une pluralité de modules électroniques, la pluralité de modules électroniques étant des perles électroniques (16), et
un module de communication (18) en communication avec les perles électroniques, le module de communication incluant un processeur configuré pour exécuter le procédé conforme à l'une quelconque des revendications 1 à 9.
